# EUROPEAN PATENT APPLICATION

(11) **EP 4 769 937 A1**
(43) Date of publication of application: **01.07.2026**
(21) Application number: 24315602.3
(22) Date of filing: 24.12.2024
(51) Int. Cl.: H02S 20/10, H02S 40/22

(54) **PHOTOVOLTAIC EQUIPMENT CARRYING STRUCTURE, PHOTOVOLTAIC EQUIPMENT AND ASSOCIATED MANUFACTURING METHOD**

(71) Applicant: TOTALENERGIES ONETECH, 92400 Courbevoie (FR)
(72) Inventor: CHAPON, Julien, 92400 COURBEVOIE (FR); RABOIN, Jean-Christophe, 92400 COURBEVOIE (FR)
(74) Representative: Innovincia

(57) **Abstract**

The present invention refers to a photovoltaic module carrying structure (11) comprising a metallic frame providing:
- a holding part (12) comprising a first vertical post (11a) comprising a first slot (11b) configured for receiving a first side edge of a photovoltaic module (13) and a second vertical post (11a) comprising a second slot (11b) configured for facing the first slot (11b) for receiving a second side edge of the photovoltaic module (13),
- a supporting part (14) comprising a first surface (16a) configured for extending from the bottom of the holding part (14) on a first side of the holding part (12) with an angle higher than 90°, with respect to the orientation of the first vertical post (11a) and the second vertical post (11a) and a second surface (16b) configured for extending from the bottom of the holding part (12) on a second side of the holding part (12) opposite to the first side with an angle higher than 90° with respect to the orientation of the first vertical post (11a) and the second vertical post (11a).

## Description

### Background of the invention

The field of the present invention refers to the photovoltaic equipment destined to be implemented in a solar farm, for example in a field for an agrivoltaic application or in desertic areas.

Solar farms comprise large areas wherein a large number of photovoltaic modules are distributed.

One concern of the solar farm is to prevent the soiling of the photovoltaic modules as such soiling leads to significant losses of photovoltaic yield. Furthermore, due to the high number of photovoltaic modules, a cleaning device of the photovoltaic modules is hard to implement.

In order to limit the soiling of the photovoltaic panels, it is known to arrange the photovoltaic modules vertically. However, the vertical arrangement of the photovoltaic modules tends to reduce the photovoltaic energy production, especially when the sun is close to its zenith during median hours of the day.

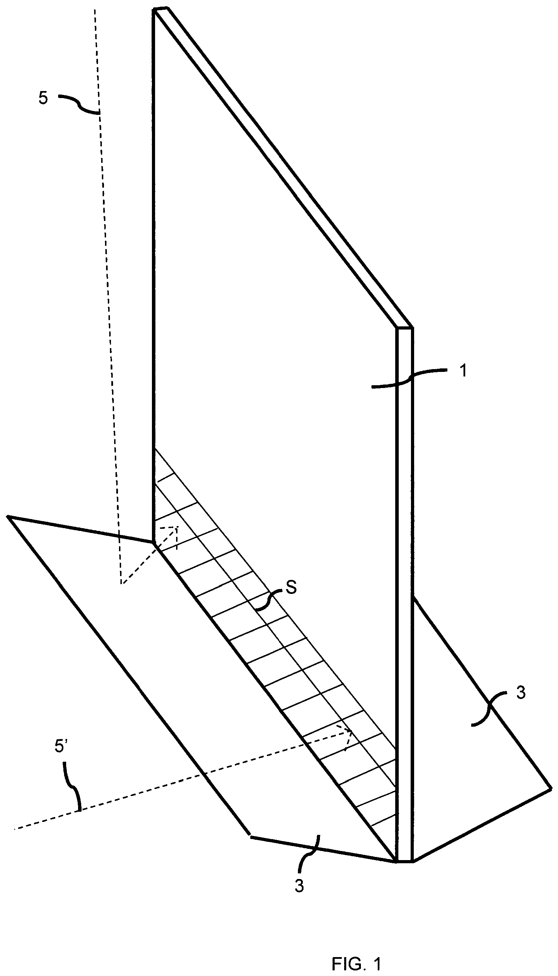

One way to overcome this loss of yield during median hours is to arrange a reflective surface, such as a bright surface or a mirror, on the floor next to the photovoltaic module, the reflective surface being tilted towards the photovoltaic module to reflect the sun rays towards the photovoltaic module as represented in Fig.1.

However, with such arrangement, the reflective surface introduces a shadow S on the lower part of the photovoltaic module when the sun is low, that is to say after sunrise or before sunset as represented by the dashed arrow 5' figurative of a sun ray and the hatched region figurative of the shadow region S in Fig.1. Furthermore, the reflective surface produces a concentration of light in the bottom region of the photovoltaic module represented by the striped region when the sun is close to its zenith which leads to the creation of hotspots in this stripped region. Such hotspots may lead to a reduction of the photovoltaic yield as well as a faster ageing of the photovoltaic module.

Furthermore, in order to be largely deployed, the photovoltaic structures need to have a low manufacturing cost and need to be easy to install.

It is therefore an object of the present invention to overcome the above-mentioned drawbacks of the state of the art and to offer a solution providing a photovoltaic equipment with a global enhanced photovoltaic yield with a limited maintenance, a limited manufacturing cost and which is easy to install.

### Summary of the invention

The present invention refers to a photovoltaic module carrying structure comprising a metallic frame providing:
- a holding part comprising a first vertical post comprising a first slot configured for receiving a first side edge of a photovoltaic module and a second vertical post comprising a second slot configured for facing the first slot for receiving a second side edge of the photovoltaic module,
- a supporting part comprising a first surface configured for extending from the bottom of the holding part on a first side of the holding part with an angle higher than 90° with respect to the orientation of the first vertical post and the second vertical post and a second surface configured for extending from the bottom of the holding part on a second side of the holding part opposite to the first side with an angle higher than 90° with respect to the orientation of the first vertical post and the second vertical post.

The use of a carrying structure made of a metallic frame enables obtaining a carrying structure that is easy to manufacture, to transport and to install on site which reduces the manufacturing, transport and installing costs. Furthermore, the use of a carrying structure comprising a raised holding part configured for receiving the photovoltaic module and a support part located below the holding part and configured for reflecting sun rays towards a neighboring photovoltaic module enables increasing the photovoltaic conversion yield while limiting the soiling of the photovoltaic module which is raised and arranged vertically.

According to another embodiment, the first surface and the second surface are configured to provide a diffuse reflection of the light.

According to another embodiment, the metallic frame is made from a metallic plate which is cut out and folded to provide the photovoltaic equipment carrying structure.

According to another embodiment, a first sideband and a second sideband of the metallic plate are folded up to increase the rigidity of the carrying structure.

According to another embodiment, the metallic frame also comprises a first base plate extending form the first surface and a second base plate extending from the second surface.

According to another embodiment, the first base plate and the second base plate are configured for lying on the ground and comprises holes configured for receiving a stake destined to be partially buried in the ground for securing the photovoltaic equipment carrying structure to the ground.

According to another embodiment, the first base plate and the second base plate are configured to be buried or covered to ensure the securing of the photovoltaic equipment carrying structure to the ground.

According to another embodiment, the first vertical post and the second vertical post comprise holes in their bottom part configured to receive photovoltaic module securing means.

According to another embodiment, the carrying structure also comprises reinforcing vertical rods configured to extend along the first and the second vertical posts.

According to another embodiment, the reinforcing vertical rods are configured to be partially buried in the ground to ensure the securing of the carrying structure to the ground.

According to another embodiment, the carrying structure also comprises stiffening elements configured for linking the vertical reinforcing rods.

According to another embodiment, the angle between the first surface and the orientation of the first and second vertical post is lower than 180° and the angle between the second surface and the orientation of the first and second vertical post is lower than 180°.

The present invention also refers to a photovoltaic equipment comprising a photovoltaic module carrying structure as described previously and at least one photovoltaic module configured to be arranged vertically on the carrying structure.

The present invention also refers to a photovoltaic structure comprising a plurality of photovoltaic equipment as described previously arranged as a row and a plurality of rows arranged parallel to each other and wherein the first surface and the second surface of a carrying structure of a photovoltaic equipment of a row is configured to reflect sun rays towards the photovoltaic modules of the adjacent rows.

According to another embodiment, the rows are oriented according to a south-north axis.

The present invention also refers to a method for manufacturing a photovoltaic equipment carrying structure comprising the following steps:
- providing a metallic plate,
- processing the metallic plate to provide a template with cutting parts, holes and pre-fold parts, the template being configured to be folded to provide a carrying structure.

### Brief description of the drawings

[Fig.1] is a diagram of a photovoltaic equipment with a vertical photovoltaic module and reflective surfaces according to the state of the art;
[Fig.2] is a diagram of a photovoltaic equipment carrying structure according to a first embodiment of the present invention;
[Fig.3] is a diagram of a photovoltaic equipment according to an embodiment of the present invention;
[Fig.4] is a diagram of a carrying structure according to a second embodiment of the present invention;
[Fig.5] is a diagram of a carrying structure according to a third embodiment of the present invention;
[Fig.6] is a diagram of a carrying structure according to a fourth embodiment of the present invention;
[Fig.7] is a diagram of reinforcing elements of a carrying structure according to an embodiment of the present invention;
[Fig.8] is a diagram of a template of a carrying structure made of a processed metal plate according to an embodiment of the present invention;
[Fig.9] is a diagram of a photovoltaic structure according to an embodiment of the present invention.;
[Fig.10] is a flowchart of the steps of a manufacturing method according to an embodiment of the present invention;
[Fig.11] is a flowchart of the steps of a manufacturing and setting up method according to an embodiment of the present invention.

### Detailed description of the invention

The following achievements are examples. Although the specification refers to one or several embodiments, it does not imply that each reference refers to the same embodiment or that the features apply only to a single embodiment. Simple features of different embodiments can also be combined to provide other embodiments.

In the description, some elements may be indexed, for example first element or second element. In this case, it is a simple indexing to differentiate and name similar but not identical elements. This indexing does not imply a priority of one element over another and such names can easily be interchanged without going beyond the scope of the present invention.

### Carrying structure

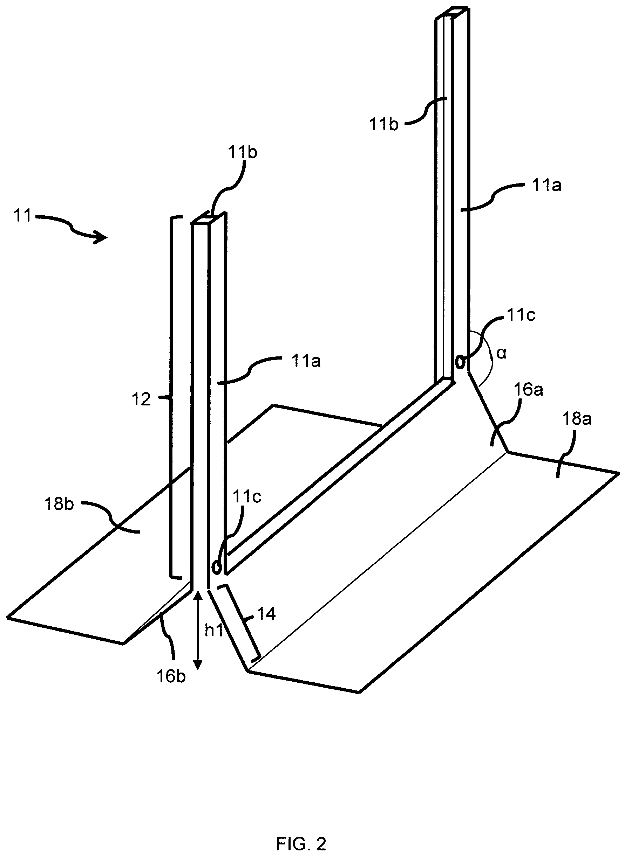

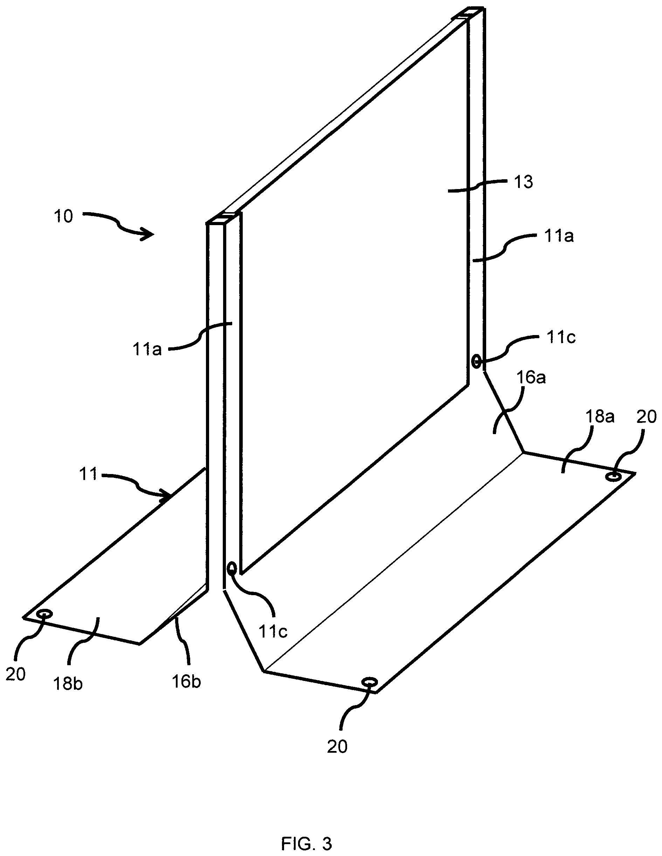

Fig.2 represents an example of a carrying structure 11 of a photovoltaic module 13 (visible in Fig.3) according to an embodiment of the present invention. The carrying structure 11 may be made of a metallic frame, for example a steel, stainless steel or aluminum frame.

The photovoltaic module 13 may be a bifacial photovoltaic module 13 configured for receiving sunlight on both of its faces. Alternatively, the carrying structure 11 may be configured for receiving two (monofacial) photovoltaic modules 13 arranged back-to-back to provide a photovoltaic equipment 10 configured for converting sun rays coming from both sides into electricity.

The carrying structure 11 comprises a holding part 12 configured for holding the photovoltaic module 13 (the holding part 12 may be used to hold several photovoltaic modules 13, for example two superimposed photovoltaic modules 13). The holding part 12 comprising a first vertical post 11a comprising a first slot 11b configured for receiving a first side edge of a photovoltaic module 13 and a second vertical post 11a comprising a second slot 11b configured for facing the first slot 11b for receiving a second side edge of the photovoltaic module 13. The vertical posts 11a may have a rectangular cross section and may be hollow. The photovoltaic module 13 may be slid vertically from the top to be inserted within the holding part 12 of the carrying structure 11. The vertical posts 11a may comprise holes 11c arranged in their bottom part configured to receive securing elements in order to secure the photovoltaic module 13 to the carrying structure 11.

The carrying structure 11 also comprises a supporting part 14 configured for supporting the holding part 12 and for raising the holding part 12 to a predetermined height h1. The predetermined height h1 is for example comprised between 20cm and 1m.

The supporting part 14 comprises a first surface 16a configured for extending from the bottom of the holding part 12 on a first side of the holding part 12. The first surface 16a is configured to be inclined with an angle α higher than 90° with respect to the orientation of the vertical posts 11a. the angle α is most preferably lower than 180°. The angle α is for example comprised between 120° and 150°. The first surface 16a forms therefore a first inclined panel.

The supporting part 14 also comprises a second surface 16b configured for extending from the bottom of the holding part 12 on a second side of the holding part 12 opposite to the first side. The second surface 16b is configured to be inclined with an angle higher than 90° with respect to the orientation of the vertical posts 11a. The orientation of the first surface 16a and the second surface 16b may be symmetric with respect to the plane defined by the first vertical posts 11a. The second surface 16a forms therefore a second inclined panel.

The first surface 16a and the second surface 16b are configured to reflect sun rays and are preferably configured to provide a diffuse reflection of the light. The first surface 16a and the second surface 16b may be Lambertian surfaces so that sun rays impinging the first surface 16a or the second surface 16b are reflected equally in all the directions. Such diffuse reflection may be obtained by a matte aspect. The matte aspect may be inherent to the material of the metallic frame of may be obtained by a processing step such as a painting or a surface finishing.

The carrying structure 11 may also comprise a first base plate 18a extending form the first surface 16a and a second base plate 18b extending from the second surface 16b.

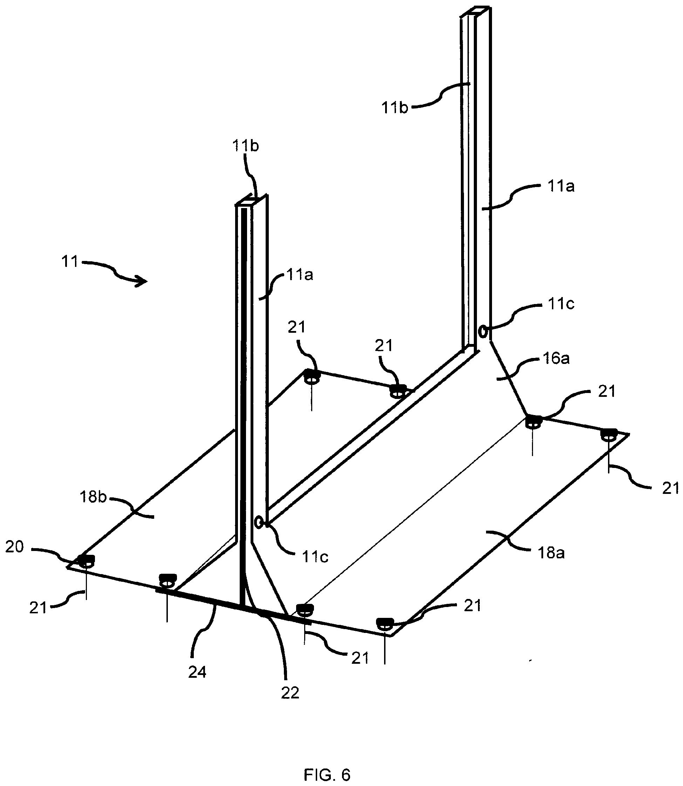

According to a first embodiment represented in Fig.3, the first base plate 18a and the second base plate 18b are configured for lying on the ground and may comprise holes 20 configured for receiving a stake 21 (visible in Fig.6) destined to be partially buried in the ground for securing the carrying structure 11 to the ground. The holes 20 may be arranged in the extremal corners of the first and the second base plates 18a, 18b. Alternatively, a higher number of holes may be arranged in the base plates 18a, 18b.

According to a second embodiment, the first base plate 18a and the second base plate 18b are configured to be buried or covered to ensure the securing of the carrying structure 11 to the ground. The first and second base plate 18a, 18b may be buried in the ground under a few centimeters. Alternatively, the first and second base plates 18a, 18b may be covered by heavy materials such as sand or stones to ensure the stability of the carrying structure 11.

The first and second base plates 18a, 18b may have similar or same surface light reflection properties than the first surface 16a and second surface 16b.

The carrying structure 11 may also comprise additional reinforcing elements to strengthen the carrying structure 11.

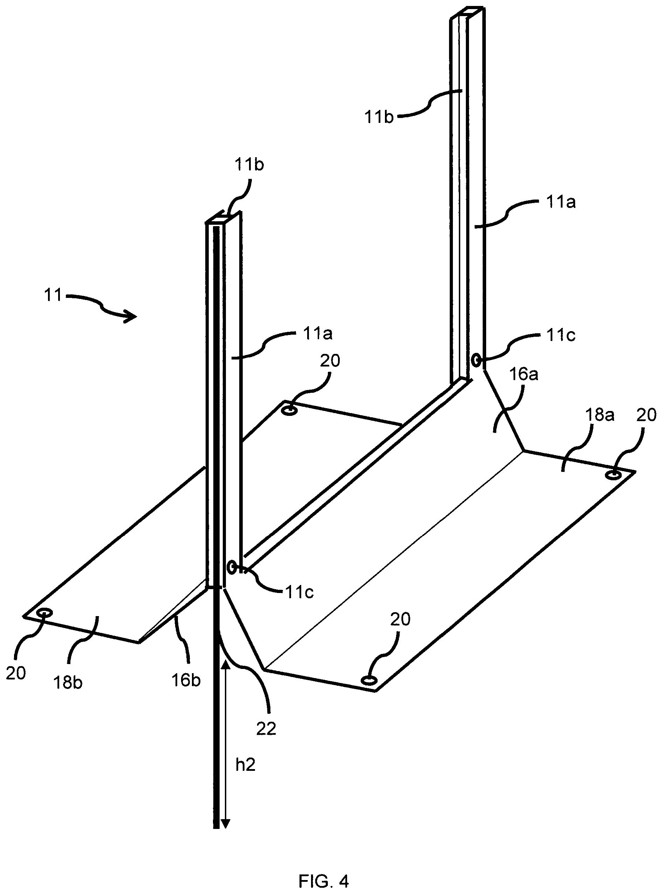

As shown in Fig.4, the carrying structure 11 may comprise vertical rods 22 configured to be introduced in the vertical posts 11a (in case of hollow vertical posts) or fastened to the vertical posts 11a and configured to be buried partially of a predetermined height h2. The height h2 may be comprised between 20cm and 2m, for example 40cm. The vertical rods 22 may be metallic rods, for example steel or stainless steel rods.

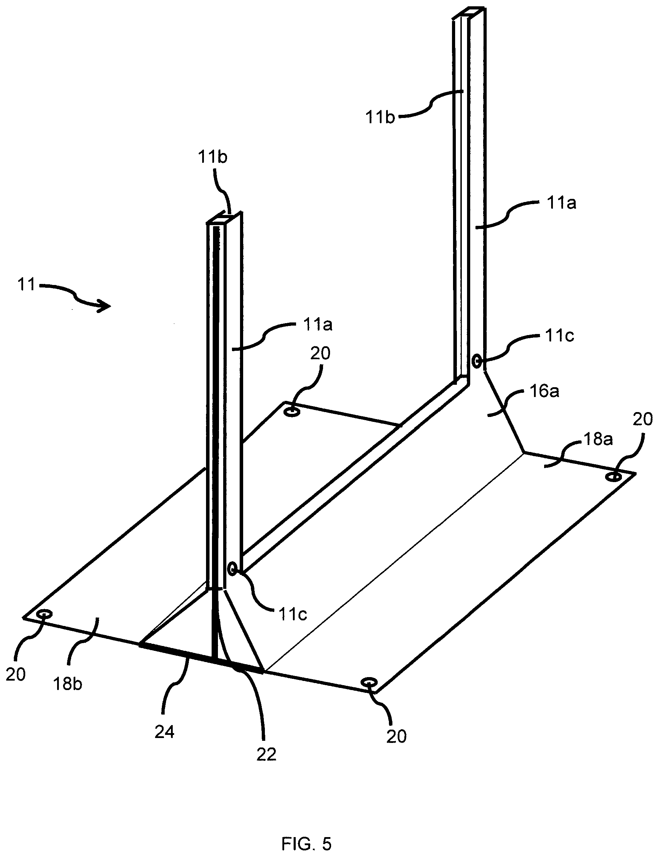

As shown in Fig.5, the carrying structure 11 may comprise base rods 24 associated with the vertical rods 22. The base rod 22 are configured to extend horizontally on the ground on both side of the vertical rod 22. The base rod 24 is configured to extend towards the first and the second base plate 18a, 18b. The base rods 22 may be secured to the base plates 18a, 18b. A base rod 24 and a vertical rod 22 may be a single element. The base rod 24 may be welded to the vertical rod 22. In this embodiment, the vertical rods 22 may not be partially buried but only set on the ground.

As shown in fig.6, the base rods 24 may comprise holes at both of their extremities and may be configured to extend under the first and the second plates 18a, 18b so that holes of the base rods 24 may come in front of holes 20 of the first and the second base plate 18a, 18b so that stakes 21 may be introduced through both holes 20 of the base plates 18a, 18b and holes of the base rods 24 to reinforce the carrying structure 11 and to secure the carrying structure 11 to the ground.

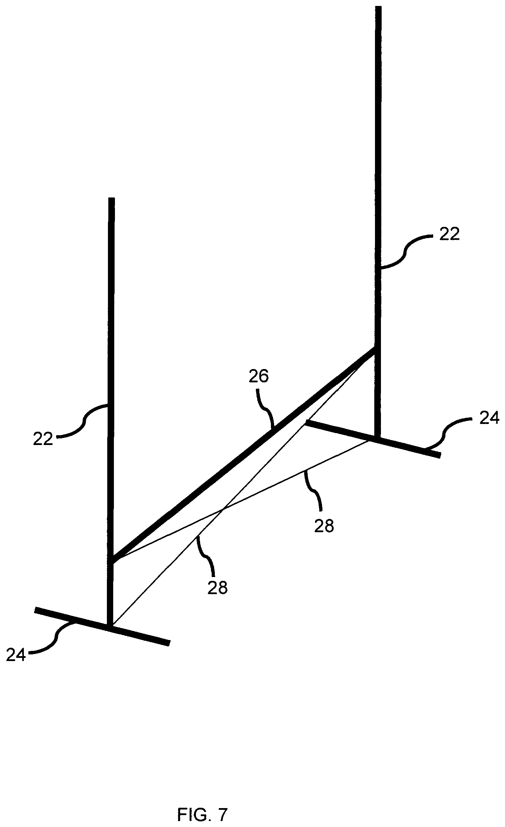

As shown in fig.7, the carrying structure 11 may also comprise stiffening transversal elements configured to be arranged below the holding part 12 and linking the vertical rods 22. The stiffening transversal elements may comprise a transversal rod 26. The transversal rod 26 may extend perpendicular to the vertical rods 22. The transversal rod 26 may be a metallic rod and may be of the same material as the vertical rods 22. The transversal rod 26 and the vertical rods 22 may be a single element. The transversal rod 26 may be welded to the vertical rods 22.

The stiffening transversal elements may comprise tensioned elements 28 such as cables, tendons or ropes. According to the embodiment of Fig.7, two tensioned elements 28 crossing each other are arranged between two vertical rods 22 but other arrangements may also be used. The tensioned elements 28 may be used as an alternative or in combination with the transversal rods 26.

The different embodiments of the carrying structure 11 presented previously may be combined to provide other embodiments according to the desired stiffness of the carrying structure 11.

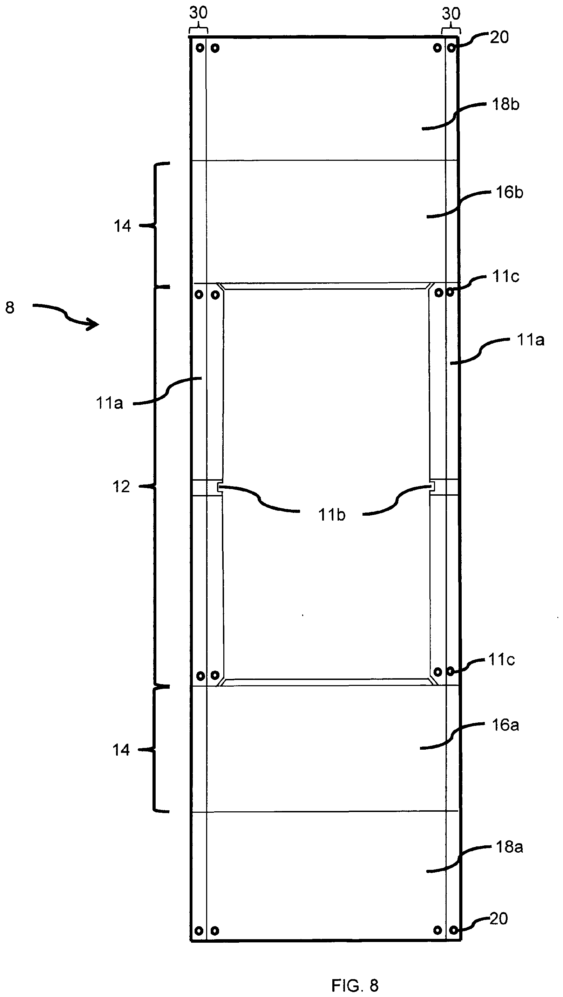

The carrying structure 11 may be obtained from a metallic plate 8 such as a steel plate, stainless steel plate or an aluminum plate. The metallic plate 8 may be cut, drilled and punched to provide a template as represented in Fig.8. In particular, the template may comprise two sidebands or lateral flaps 30 configured to be folded up to strenghten the carrying structure 11. As indicated previously, the first surface 16a and the second surface 16b may receive additional processing steps to provide a diffuse reflection. This additional processing step may also be applied to the first and second base plates 18a, 18b. The additional processing step may refer to a chemical process (anodizing for aluminum, galvanizing or chromating for steel) or mechanical process (sanding, shot blasting for aluminum or stainless steel). An additional coating such as a matte paint may also be applied on the first and second surface 16a, 16b. For sake of improvement of resistance to corrosion and/or erosion, it is particularly desirable to process the entire surface of metallic plate 8 rather than mere first and second surfaces 16a and 16b.

Thus, based on this template, the metallic plate 8 may be folded to provide the carrying structure 11 presented in Fig.2. The carrying structure 11 may be transported from the manufacturing factory to the solar farm as flat or pre-folded metallic plates (and possible additional reinforcing elements such as rods) and may be shaped on site. The photovoltaic modules 13 may then be assembled to the carrying structure 11 to provide photovoltaic equipment 10 as represented in Fig.3.

### Photovoltaic equipment

The present invention also refers to a photovoltaic equipment 10 comprising a carrying structure 11 as described previously and a photovoltaic module 13 arranged on the carrying structure 11. Fig.3 represents an example of photovoltaic equipment 10 according to an embodiment of the present invention. The photovoltaic equipment 10 may be arranged along a south-north axis so that a first side of the photovoltaic module 13 is facing the east direction and the other side of the photovoltaic module 13 is facing the west direction.

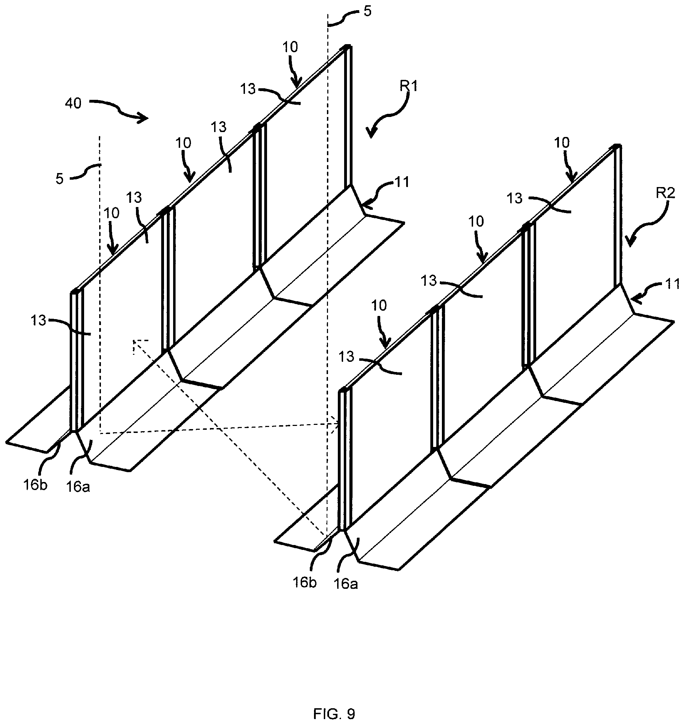

A plurality of photovoltaic equipment 10 may be aligned next to the other (a vertical post of a photovoltaic equipment 10 being arranged next to a vertical post 11a of the adjacent photovoltaic equipment 10) to form a row of photovoltaic equipment 10. Several rows of photovoltaic equipment 10 may be arranged in parallel to provide a photovoltaic structure 40 as represented in Fig.9.

### Photovoltaic structure

In the example of Fig.9, the photovoltaic structure 40 comprises a first row R1 of three photovoltaic elements 10 and a second row R2 of three photovoltaic elements 10 but in practice, the rows may comprise tens or hundreds of photovoltaic equipment 10 and tens or hundreds of parallel rows may be distributed in the solar farm. The distance d between the first row R1 and the second row R2 is for example comprised between 5m and 10m. Preferably, the rows R1, R2 may be oriented according to a north-south direction as indicated above for the orientation of a photovoltaic equipment 10.

Within a row, a single vertical rod 22 may be secured to two adjacent vertical posts 11a. The first and second surfaces 16a, 16b may be configured to reflect a sun ray 5 close to the vertical direction (corresponding to a sun close to its zenith) towards one or several photovoltaic modules 13 of an adjacent row as represented by the sun rays 5 in Fig.9. Thus, a sun ray reaching the first surface 16a of the first row R1 located in front of the side of the second row R2 may be reflected towards one or several photovoltaic modules 13 of the second row R2 while a sun ray 5 reaching the second surface 16b of the second row R2 located in front of the side of the first row R1 may be reflected towards one or several photovoltaic modules 13 of the first row R1. Such reflections towards neighboring photovoltaic modules 13 enable increasing the overall photovoltaic yield of the photovoltaic structure 40 in particular during median hours of the day when the sun is close to its zenith. Furthermore, the diffuse reflection of the first surface 16a and the second surface 16b prevents hotspots to appear in the photovoltaic modules, which could be the case with specular reflection in case of brilliant surfaces such as mirrors.

Thus, as the first and second surfaces 16a, 16b are diffuse reflective surfaces, the sun rays 5 are reflected towards a large surface of the photovoltaic module(s) of the adjacent row, which prevents the creation of hotspots due to the reflected sun rays.

### Manufacturing method

The present invention also refers to a method for manufacturing a photovoltaic module carrying structure 11 as described previously.

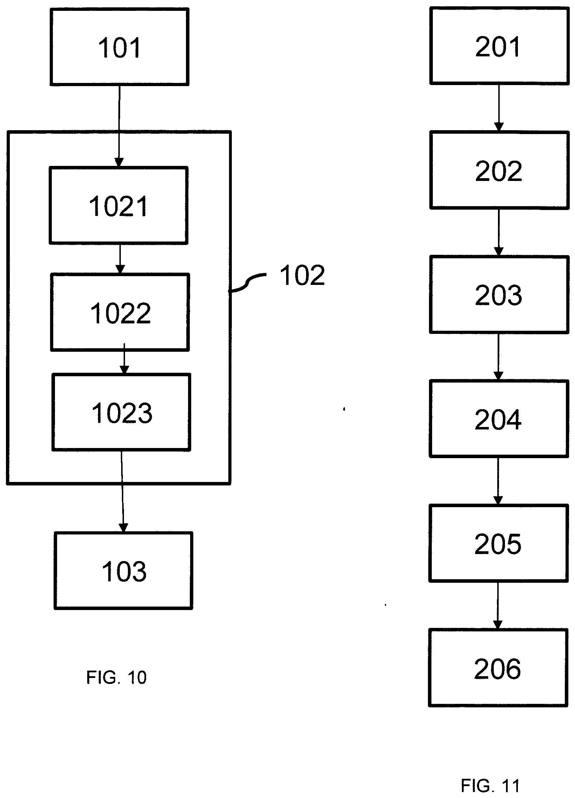

Fig.10 represents a flowchart of the different steps of the manufacturing method.

The first step 101 refers to a step of providing of a metallic plate 8 such as a steel plate, a stainless steel plate or an aluminum plate. The metallic plate 8 may have a rectangular shape.

The second step 102 refers to a processing step of the metallic plate 8.

The processing step 102 may comprise a first sub-step 1021 of cutting the metallic plate 8 provided in step 101, in particular to remove the central part to obtain the shape of the template represented in Fig.9.

The processing step 102 may also comprise a second sub-step 1022 of drilling of the holes 11c and 20 in the metallic plate 10 as represented in Fig.8.

The processing step 102 may also comprise a third sub-step 1023 of punching the metallic plate 8 to provide pre-fold lines to ease the folding of the different parts of the metallic plate 8 (other techniques known by the man skilled in the art to provide the pre-fold lines). The pre-fold lines are represented by the small section lines in Fig.8.

The processing step 102 may also comprise an optional step of processing the first and second surfaces 16a, 16b to provide a matte aspect. The matte aspect may be obtained by chemical process (anodizing for aluminum, galvanizing or chromating for steel) or mechanical process (sanding, shot blasting for aluminum or stainless steel). Alternatively or in addition, the metal plate 8 may be coated with matte paint or matte varnish or may be powder coated.

According to an alternative method not shown in figure 10, step 102 may comprise a pre-folding step consisting in partial folding of metallic plate 8 and/or full folding of some of the pre-fold lines further to steps 1021, 1022 and 1023, and before optional step of processing the first and second surfaces 16a, 16b to provide a matte aspect.

The processing step 102 leads to the template presented in Fig.8.

The third step 103 refers to a shaping step of the carrying structure 11. The shaping step 103 comprises the folding of the template obtained in step 102 along the pre-fold lines to provide the carrying structure 11 presented in fig.2.

### Manufacturing and setting up method

The present invention may also refer to a method for manufacturing and setting up a photovoltaic equipment 10 as described previously.

Fig.11 represents a flowchart of the steps of such method.

The steps 201 to 203 are similar to the steps 101 to 103 of the method for manufacturing a carrying structure 11 described previously.

The fourth step 204 refers to a step of reinforcing the carrying structure 11. Such reinforcing step 204 may comprise the addition of vertical rods 22 which may be secured to the vertical posts 11a or which may go through the hollow vertical rods 22. The reinforcing step 204 may also comprise the addition of base rods 24 and/or transversal rods 26 and/or tensioned elements 28.

The fifth step 205 refers to a securing step for securing the carrying structure 11 to the ground. The securing step 205 may comprise the insertion of stakes 21 within the holes 20 of the carrying structure 11 and in particular of the base plates 18a, 18b, and through the ground. Alternatively or in addition, the securing step 205 may also refer to the insertion of an end of the vertical rods 22 through the ground.

The sixth step 206 refers to the assembly of the at least one photovoltaic module 13 on the secured carrying structure 11. Such assembly may be achieved by sliding vertically (from top to bottom) the photovoltaic module 13 between the first slot 11b and the second slot 11b of the carrying structure 11. The photovoltaic module 13 is then arranged vertically within the carrying structure 11. The assembly may also comprise the securing of the photovoltaic module 13 to the carrying structure 11 for example by inserting securing elements in the holes 11c of the carrying structure 11. In this case, securing elements may consist in bolting or riveting so that at least two opposite edges of the photovoltaic module 13 are clamped and tightly maintained within first and second slots 11b. Bolting is preferred. An elastomeric material may be inserted between the photovoltaic module 13 and the first and second slots 11b to prevent degradation when clamping and rupture when temperature variation results in different thermal expansion rate of the carrying structure 11 and of the photovoltaic module 13.

The different steps of this method may be repeated to obtain a photovoltaic structure 40 as described in Fig.9.

Some steps or substeps of the methods described previously may be optional and the order of the presented steps may be different.

Thus, such manufacturing method and setting up method allow to easily manufacture, transport and set up on site a large number of photovoltaic equipment carrying structures 11 to provide a photovoltaic structure 40 comprising a large number of photovoltaic equipment 10. Such photovoltaic structure 40 may produce important power of photovoltaic energy while requiring limited maintenance due to the low soiling provided by the geometry of the photovoltaic equipment with vertical and raised photovoltaic modules 13. A photovoltaic structure 40 may then be easily implemented in any location and the overall cost of such photovoltaic structure 40 is reduced.

## Claims

1. Photovoltaic module carrying structure (11) comprising a metallic frame providing:
- a holding part (12) comprising a first vertical post (11a) comprising a first slot (11b) configured for receiving a first side edge of a photovoltaic module (13) and a second vertical post (11a) comprising a second slot (11b) configured for facing the first slot (11b) for receiving a second side edge of the photovoltaic module (13),
- a supporting part (14) comprising a first surface (16a) configured for extending from the bottom of the holding part (14) on a first side of the holding part (12) with an angle higher than 90°, with respect to the orientation of the first vertical post (11a) and the second vertical post (11a) and a second surface (16b) configured for extending from the bottom of the holding part (12) on a second side of the holding part (12) opposite to the first side with an angle higher than 90° with respect to the orientation of the first vertical post (11a) and the second vertical post (11a).

2. Photovoltaic module carrying structure (11) according to claim 1 wherein the first surface (16a) and the second surface (16b) are configured to provide a diffuse reflection of the light.

3. Photovoltaic module carrying structure (11) according to claim 1 or 2 wherein the metallic frame is made from a metallic plate (8) which is cut out and folded to provide the photovoltaic equipment carrying structure (11).

4. Photovoltaic module carrying structure (11) according to claim 3 wherein a first sideband (30) and a second sideband (30) of the metallic plate (8) are folded up to increase the rigidity of the carrying structure (11).

5. Photovoltaic module carrying structure (11) according to one of the previous claims wherein the metallic frame also comprises a first base plate (18a) extending form the first surface (16a) and a second base plate (18b) extending from the second surface (16b).

6. Photovoltaic module carrying structure (11) according to the previous claim wherein the first base plate (18a) and the second base plate (18b) are configured for lying on the ground and comprises holes (20) configured for receiving a stake (21) destined to be partially buried in the ground for securing the photovoltaic equipment carrying structure (11) to the ground.

7. Photovoltaic module carrying structure (11) according to claims 5 wherein the first base plate (18a) and the second base plate (18b) are configured to be buried or covered to ensure the securing of the photovoltaic equipment carrying structure (11) to the ground.

8. Photovoltaic module carrying structure (11) according to one of the previous claims wherein the first vertical post (11a) and the second vertical post (11a) comprise holes (11c) in their bottom part configured to receive photovoltaic module securing means.

9. Photovoltaic module carrying structure (11) according to one of the previous claims wherein it also comprises reinforcing vertical rods (22) configured to extend along the first and the second vertical posts (11a).

10. Photovoltaic module carrying structure (11) in accordance with claim 9 wherein the reinforcing vertical rods (22) are configured to be partially buried in the ground to ensure the securing of the carrying structure (11) to the ground.

11. Photovoltaic module carrying structure (11) in accordance with claim 9 or 10 wherein it also comprises stiffening elements (26, 28) configured for linking the vertical reinforcing rods (22).

12. Photovoltaic module carrying structure (11) in accordance with one of the previous claims wherein the angle between the first surface (16a) and the orientation of the first and second vertical post (11a, 11b) is lower than 180° and the angle between the second surface (16b) and the orientation of the first and second vertical post (11a, 11b) is lower than 180°.

13. Photovoltaic equipment (10) comprising a photovoltaic module carrying structure (11) according to one of the previous claims and at least one photovoltaic module (13) configured to be arranged vertically on the carrying structure (11).

14. Photovoltaic structure (40) comprising a plurality of photovoltaic equipments (10) according to the previous claim arranged as a row (R1, R2) and a plurality of rows (R1, R2) arranged parallel to each other and wherein the first surface (16a) and the second surface (16b) of a carrying structure (11) of a photovoltaic equipment (10) of a row is configured to reflect sun rays towards the photovoltaic modules (13) of the adjacent rows.

15. Photovoltaic structure (40) according to the previous claim wherein the rows (R1, R2) are oriented according to a south-north axis.

16. Method for manufacturing a photovoltaic equipment carrying structure (11) comprising the following steps:
- providing (101, 201) a metallic plate (8),
- processing (102, 202) the metallic plate (8) to provide a template with cutting parts, holes and pre-fold parts, the template being configured to be folded to provide a carrying structure (11).
